# EUROPÄISCHE PATENTSCHRIFT

(11) **EP 1 249 381 B1**
(45) Veröffentlichungstag und Bekanntmachung des Hinweises auf die Patenterteilung: **18.01.2006**
(21) Anmeldenummer: 02005007.6
(22) Anmeldetag: 06.03.2002
(51) Int. Cl.: B62D 25/04, B62D 21/15

(54) **Karosserierahmen eines Kraftfahrzeuges**
Body frame for vehicles
Châssis pour véhicule

(30) Priorität: 05.04.2001 DE 10117010
(43) Veröffentlichungstag der Anmeldung: 16.10.2002
(73) Patentinhaber: DaimlerChrysler AG, 70567 Stuttgart (DE)
(72) Erfinder: Glashagel, Mario, 71292 Friolzheim (DE); Holzapfel, Bernhard, 72116 Mössingen (DE); Freitag, Elmar, 71263 Weil der Stadt (DE); Harloff, Bernd, Dr., 71034 Böblingen (DE)

(56) Entgegenhaltungen:
- DE-A- 4 016 730
- DE-A- 19 603 098
- DE-A- 19 954 296
- US-A- 5 671 968
- PATENT ABSTRACTS OF JAPAN vol. 2000, no. 09, 13. Oktober 2000 (2000-10-13) & JP 2000 177629 A (TOYOTA MOTOR CORP), 27. Juni 2000 (2000-06-27)

## Beschreibung

Die Erfindung betrifft einen Karosserierahmen eines Kraftfahrzeugs mit den Merkmalen des Oberbegriffs des Anspruchs 1.

Üblicherweise besitzt ein derartiger Karosserierahmen zwei seitliche Tragsäulen, die bei einem Personenkraftwagen entsprechend ihrer Positionierung als "A-, B- oder als C-Säule" bezeichnet werden. Aus der DE 40 16 730 C2 sind Tragsäulen für einen Karosserierahmen der eingangs genannten Art bekannt, die einen säulenförmigen Hohlkörper aufweisen. Dieser Hohlkörper besitzt zwei Profilschalen, die einen Hohlraum umschließen, in dem ein Rohrkörper angeordnet ist, der sich in Längsrichtung des Hohlkörpers erstreckt und am Hohlkörper befestigt ist.

Ein derartiger Karosserierahmen ist aus der US 5,671,968 grundsätzlich bekannt und umfasst zwei seitliche Tragsäulen, die sich dachseitig über einen druckstabilen Dachquerträger aneinander und bodenseitig jeweils über einen druckstabilen Sitzquerträger an einem Längstunnel abstützen. Dabei sind die Tragsäulen beim bekannten Karosserierahmen mit einer Art Sollknickstelle ausgestattet, die bei einem Seitenaufprall ein Nachgeben des Karosserierahmens im Bereich der Sollknickstelle bewirkt, was zu einer verbesserten Energieabsorption beim Seitenaufprall führen soll.

Bei einem Karosserierahmen, dessen Tragsäulen im Bereich der Rückenlehne eines Fahrer- oder Beifahrersitzes angeordnet sind (sog. "B-Säulen"), wird bei modernen Kraftfahrzeugen eine besonders hohe Seitenaufprallstabilität gefordert, um bei einem Seitenaufprall eine ungestörte Entfaltung eines sich zwischen Rückenlehne und Tragsäule entfaltenden Seitenaufprallairbags gewährleisten zu können. Außerdem soll die Fahrgastzelle auch bei einem Überschlag des Fahrzeugs die Sicherheit der Fahrzeuginsassen gewährleisten. Darüber hinaus besteht der Wunsch, die Tragsäulen des Tragrahmens möglichst stark gegenüber einer vertikalen Achse zu neigen, um dadurch das Fahrzeug flacher ausbilden zu können.

Die vorliegende Erfindung beschäftigt sich mit dem Problem, für einen Karosserierahmen der eingangs genannten Art eine Ausführungsform anzugeben, die einen erhöhten Seitenaufprallschutz gewährleistet.

Dieses Problem wird erfindungsgemäß durch einen Karosserierahmen mit den Merkmalen des Anspruchs 1 gelöst.

Die Erfindung beruht auf dem allgemeinen Gedanken, den Karosserierahmen so auszugestalten, dass sich über die Tragsäulen ein ringförmig geschlossener Trägerverbund bildet, wodurch in Fahrzeugquerrichtung eine intensive Abstützung der Tragsäulen gewährleistet ist. Beim erfindungsgemäßen Karosserierahmen wird dies dadurch realisiert, dass die beiden Tragsäulen dachseitig über einen druckstabilen Dachquerträger und bodenseitig über einen Verbund aus Sitzquerträgern und Längstunnel aneinander abgestützt sind. Außerdem sind beim erfindungsgemäßen Karosserierahmen die Tragsäulen jeweils mit einem säulenförmigen Hohlkörper ausgestattet, in dem sich, im wesentlichen in Längsrichtung des Hohlkörpers ein Rohrkörper erstreckt. Ein Rohrkörper besitzt sehr hohe Steifigkeitswerte, so dass sich die Stabilität der Tragsäule und somit des Karosserierahmens verbessert.

Im Bereich der Tragsäulen besitzt der Karosserierahmen somit eine hohe Formstabilität, insbesondere bei einem Seitenaufprall und bei einem Überschlag. Dementsprechend kann der erfindungsgemäße Karosserierahmen bei einer Verwendung seiner Tragsäulen als B-Säulen hinreichend lange einen ausreichenden Abstand zwischen B-Säule und Rückenlehne gewährleisten, um ein Entfalten eines Seitenaufprallairbags sicher zu stellen. Durch die erhöhte Stabilität der B-Säule kann die A-Säule entlastet werden, so dass diese flacher, schmaler und mit vergrößerter Neigung ausgebildet werden kann.

Bei einer bevorzugten Ausführungsform können die beiden Sitzquerträger zusätzlich über einen druckstabilen Brückenträger aneinander abgestützt sein, der den Längstunnel überbrückt. Durch diese Maßnahme wird die quer verlaufende Abstützung der beiden Tragsäulen aneinander im Bodenbereich erheblich verbessert.

Vorzugsweise werden Dachträger und/oder Sitzquerträger und/oder Brückenträger mit einem druckstabilen Hohlprofil ausgestattet. Mit Hohlprofilen kann eine besonders hohe Druckstabilität erzielt werden, wobei gleichzeitig ein geringes Bauteilgewicht realisierbar ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert.

Es zeigen, jeweils schematisch,
- Fig. 1: einen Querschnitt durch einen erfindungsgemäßen Karosserierahmen,

- Fig. 2: eine perspektivische Ansicht auf einen den Querschnitt gemäß Fig. 1 enthaltenden Abschnitt des Karosserierahmens und
- Fig. 3: einen Schnitt entsprechend den Schnittlinien III in Fig. 1 durch eine Tragsäule.

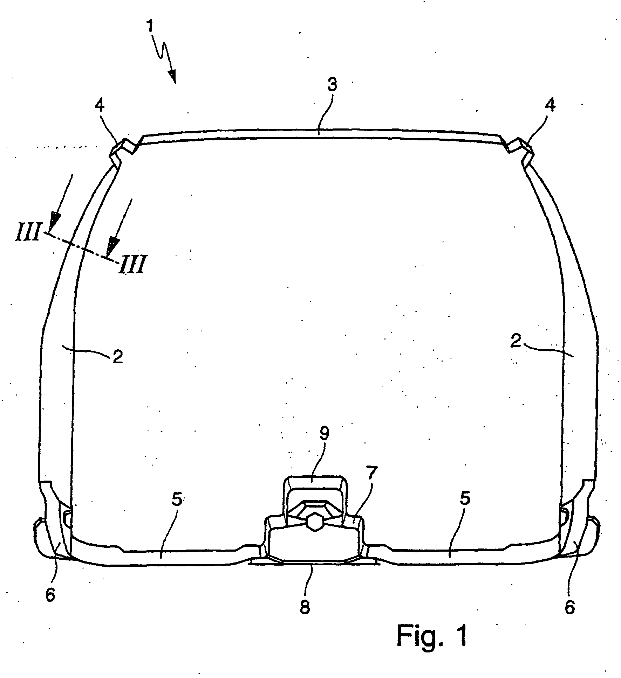

Entsprechend Fig. 1 weißt ein erfindungsgemäßer Karosserierahmen 1 an jeder Seite des Fahrzeugs, insbesondere eines Personenkraftwagens, jeweils eine Tragsäule 2 auf, die beispielsweise als B-Säule eines Personenkraftwagens dienen. An ihren oberen Enden sind die beiden Tragsäulen 2 an einem gemeinsamen Dachquerträger 3 befestigt und über diesen aneinander abgestützt. Der Dachquerträger 3 ist vorzugsweise aus einem druckstabilen Hohlprofil gebildet. Im vorliegenden Fall erfolgt die Befestigung und Abstützung der Tragsäulen 2 am Dachquerträger 3 indirekt über jeweils einen Dachlängsträger 4.

Jede der Tragsäulen 2 ist an ihrem unteren Ende an einen Sitzquerträger 5 angeschlossen, wobei auch diese Anbindung indirekt über einen seitlichen Bodenlängsträger 6 erfolgen kann. Auch die Sitzquerträger 5 sind besonders druckstabil ausgebildet und weisen entsprechende Hohlprofile auf.

An ihren von den Tragsäulen 2 abgewandten Enden stützen sich die Sitzquerträger 5 an einem Längstunnel 7 des Karosserierahmens 1 ab. Die Abstützwirkung in Fahrzeugquerrichtung wird im Bereich des Längstunnels 7 durch einen Brückenträger 8 verbessert, über den sich die Sitzquerträger 5 aneinander abstützen. Der Brückenträger 8 ist hier unterhalb des Längstunnels 7 angeordnet und an den Sitzquerträgern 5 befestigt. Auch der Brückenträger 8 ist druckstabil ausgebildet und weist vorzugsweise ein entsprechendes Hohlprofil auf.

Auf den Längstunnel 7 ist ein U-Profil 9 aufgesetzt, das im Crashfall dazu dient, die beiderseits davon angeordneten, nicht dargestellten Fahrzeugsitze aneinander abzustützen.

Da die beiden Tragsäulen 2 dachseitig über den Dachquerträger 3 und bodenseitig über die Sitzquerträger 5, den Längstunnel 7 und den Brückenträger 8 aneinander abgestützt sind, ergibt sich ein ringförmig geschlossener Trägerverbund, der insbesondere bei einem Seitenaufprall eine besonders hohe Stabilität besitzt.

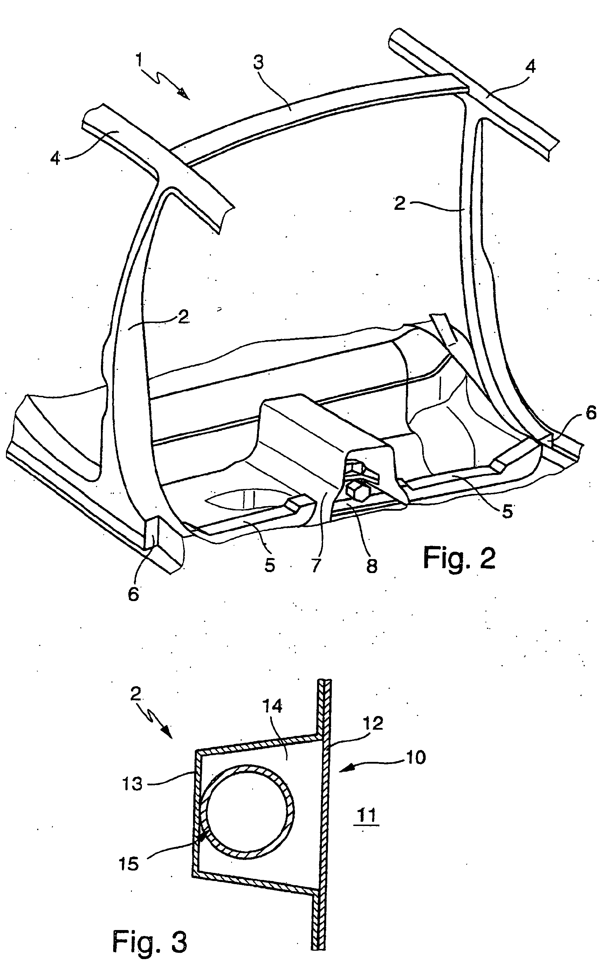

Der ringförmig geschlossene Trägerverbund ist auch in Fig. 2 deutlich erkennbar. Von besonderer Bedeutung ist hierbei, daß die Tragsäulen 2 und der Dachquerträger 3 im wesentlichen in einer gemeinsamen Ebene liegen, die Quer zur Fahrzeuglängsrichtung verläuft. Desweiteren liegen auch die Sitzquerträger 5 vorzugsweise in der selben Ebene wie die Tragsäulen 2 und der Dachquerträger 3. Außerdem ist in Fig. 2 besonders deutlich erkennbar, daß die beiden Sitzquerträger 5 über den Brückenträger 8 eine im wesentlichen geradlinige bodenseitige Abstützung der Tragsäulen 2 ausbilden. Dementsprechend liegt bei der bevorzugten Ausführungsform der genannte ringförmig geschlossene Trägerverbund in einer Ebene, die im wesentlichen quer zur Fahrzeugslängsrichtung verläuft. Hierdurch ergibt sich in dieser Ebene, in der die Tragsäulen 2 beispielsweise als B-Säulen dienen, eine besonders hohe Seitenaufprallstabilität.

Entsprechend Fig. 3 weist eine bevorzugte Ausführungsform der Tragsäulen 2 einen säulenförmigen Hohlkörper 10 auf, der zwei Profilschalen besitzt, nämlich eine einem Fahrzeuginnenraum 11 zugewandte Innenschale 12 und eine vom Fahrzeuginnenraum 11 abgewandte Außenschale 13. Diese Außenschale 13 ist U-förmig oder C-förmig ausgebildet, während die Innenschale 12 als Deckel wirkt. Die beiden Profilschalen 12 und 13 umschließen einen Hohlraum 14, in dem ein Rohrkörper 15 angeordnet ist. Dieser Rohrkörper 15 erstreckt sich dabei im wesentlichen in Längsrichtung des Hohlkörper 10 und ist an diesem bzw. an dessen Außenschale 13 befestigt. Die Tragsäule 2 ist in eine Außenhaut 16 einer im übrigen nicht dargestellten Fahrzeugkarosserie eingesetzt.

Durch den Rohrkörper 15, der vorzugsweise aus einem hochfesten Werkstoff besteht, kann die Steifigkeit, die Seitenaufprallstabilität und Überschlagstabilität der Tragsäule 2 und somit des Karosserierahmens 1 erheblich verbessert werden.

## Patentansprüche

1. Karosserierahmen eines Kraftfahrzeugs, insbesondere eines Personenkraftwagens, mit zwei seitlichen Tragsäulen (2), die sich dachseitig über einen druckstabilen Dachquerträger (3) aneinander und bodenseitig jeweils über einen druckstabilen Sitzquerträger (5) an einem Längstunnel (7) abstützen,
**dadurch gekennzeichnet,**
**dass** jede Tragsäule (2) einen säulenförmigen Hohlkörper (10) besitzt, in dem ein Rohrkörper (15) angeordnet ist, der sich im wesentlichen in Längsrichtung der Tragsäule (2) erstreckt.

2. Karosserierahmen nach Anspruch 1,
**dadurch gekennzeichnet,**
**dass** der Rohrkörper (15) aus einem hochfesten Werkstoff besteht.

3. Karosserierahmen nach Anspruch 2,
**dadurch gekennzeichnet,**
**dass** der Rohrkörper (15) aus wenigstens einem Rohr (23, 24) gebildet ist, das einen konstanten Querschnitt aufweist.

4. Karosserierahmen nach einem der Ansprüche 1 bis 3
**dadurch gekennzeichnet,**
**dass** die beiden Sitzquerträger (5) zusätzlichen über einen druckstabilen Brückenträger (8) aneinander abgestützt sind, der den Längstunnel (7) überbrückt.

5. Karosserierahmen nach einem der Ansprüche 1 bis 4,
**dadurch gekennzeichnet,**
**dass** der Dachquerträger (3) und/oder die Sitzquerträger (5) und/oder der Brückenträger (8) ein druckstabiles Hohlprofil aufweisen.

6. Karosserierahmen nach einem der Ansprüche 1 bis 5,
**dadurch gekennzeichnet,**
**dass** die Tragsäulen (2) als B-Säulen ausgebildet sind.

## Claims

1. Bodywork frame for a motor vehicle, in particular a passenger car, having two lateral load bearing columns (2), which are supported on each other, at the roof side, via a pressure-stable roof cross member (3) and, at the floor side, on a longitudinal tunnel (7), in each case via a pressure-stable seat cross member (5) **characterized in that** each load bearing column (2) has a column-like hollow body (10), in which a tubular element (15) is arranged, which extends substantially in the longitudinal direction of the load bearing column (2).

2. Bodywork frame according to Claim 1, **characterized in that** the tubular element (15) consists of a high-strength material.

3. Bodywork frame according to Claim 2, **characterized in that** the tubular element (15) is formed from at least one tube (23, 24) which has a constant cross section.

4. Bodywork frame according to one of Claims 1 to 3, **characterized in that** the two seat cross members (5) are additionally supported on each other via a pressure-stable bridge beam (8), which bridges the longitudinal tunnel (7).

5. Bodywork frame according to one of Claims 1 to 4, **characterized in that** the roof cross member (3) and/or the seat cross member (5) and/or the bridge beam (8) have/has a pressure-stable hollow profile.

6. Bodywork frame according to one of Claims 1 to 5, **characterized in that** the load bearing columns (2) are designed as B columns.

## Revendications

1. Châssis d'un véhicule automobile, notamment d'un véhicule automobile léger, comprenant deux colonnes de support latérales (2) qui s'appuient du côté du toit l'une contre l'autre par le biais d'une traverse de toit (3) stable en pression et du côté du sol contre un tunnel longitudinal (7) à chaque fois par le biais d'une traverse sous les sièges (5) stable en pression,
**caractérisé en ce que**
chaque colonne de support (2) possède un corps creux (10) en forme de colonne dans lequel est disposé un corps tubulaire (15) qui s'étend essentiellement dans la direction longitudinale de la colonne de support (2).

2. Châssis selon la revendication 1,
**caractérisé en ce que**
le corps tubulaire (15) se compose d'un matériau à haute résistance.

3. Châssis selon la revendication 2,
**caractérisé en ce que**
le corps tubulaire (15) est formé d'au moins un tube (23, 24) qui présente une section transversale constante.

4. Châssis selon l'une quelconque des revendications 1 à 3,
**caractérisé en ce que**
les deux traverses sous les sièges (5) sont en outre supportées l'une contre l'autre par le biais d'un support de pont (8) stable en pression, qui enjambe le tunnel longitudinal (7).

5. Châssis selon l'une quelconque des revendications 1 à 4,
**caractérisé en ce que**
la traverse de toit (3) et/ou les traverses sous les sièges (5) et/ou le support de pont (8) présentent un profilé creux stable en pression.

6. Châssis selon l'une quelconque des revendications 1 à 5,
**caractérisé en ce que**
les colonnes de support (2) sont réalisées sous la forme de colonnes B.
